# EUROPÄISCHE PATENTSCHRIFT

(11) **EP 0 641 963 B1**
(45) Veröffentlichungstag und Bekanntmachung des Hinweises auf die Patenterteilung: **11.12.1996**
(21) Anmeldenummer: 94110934.0
(22) Anmeldetag: 14.07.1994
(51) Int. Cl.: F16K 31/60, F16K 11/078

(54) **Einhebelmischventil**
Single-lever mixing valve
Vanne mitigeuse à levier unique

(30) Priorität: 03.09.1993 DE 4329747
(43) Veröffentlichungstag der Anmeldung: 08.03.1995
(73) Patentinhaber: Christophery GmbH, D-58644 Iserlohn (DE)
(72) Erfinder: Wiese, Benno, D-59872 Meschede (DE); Ardelt, Martin, D-59964 Medebach (DE)
(74) Vertreter: Patentanwälte Ostriga & Sonnet

(56) Entgegenhaltungen:
- EP-A- 0 096 005
- DE-A- 3 510 351
- DE-A- 3 600 959

## Beschreibung

Die Erfindung bezieht sich auf ein Einhebelmischventil nach dem Oberbegriff des Hauptanspruchs.

Aus der DE 36 00 959 C2, von der die Erfindung ausgeht, ist ein derartiges Einhebelmischventil bekannt. Das auf der Regelscheibe sitzende Führungsteil (dort Abdeckscheibe genannt) weist im Zentrum eine radial verlaufende Rippe oder erhabene Partie auf, welche von zwei Ausnehmungen begrenzt ist. Das Kopfstück des Stellschaftes ist derart gabelförmig gestaltet, daß zwei Arme und zwischen ihnen eine Vertiefung gebildet werden, wobei die beiden Arme mit den Ausnehmungen des Führungsteils und die Rippe oder erhabene Partie des Führungsteils mit der Vertiefung des Betätigungshebels formschlüssig zusammenwirken. Das Kopfstück greift also im Prinzip klauenartig an der oberseits des Führungsteils angebrachten Rippe an.

Damit die Regelscheibe translatorisch verschoben werden kann, wenn der Stellschaft um seine Schwenkachse bewegt wird, ist es erforderlich, die Rippe am Führungsteil wie auch die Vertiefung zwischen den gabelförmigen Enden des Stellschaftkopfes konisch zu gestalten, weil dies die eintretende Relativverlagerung der beiden Teile zueinander erfordert. Damit aber ist die Gesamtanordnung stark von Fertigungstoleranzen abhängig. Eine geringfügige Verlagerung der keilförmigen Ausnehmung zwischen den gabelförmigen Enden des Stellschaftes zu dessen Schwenkachse hin bedingt ein mehr oder minder großes Spiel zwischen den formschlüssig ineinandergreifenden Teilen. Ein derartiges Spiel ist jedoch dem gewünschten Betätigungskomfort äußerst abträglich, der sich insbesondere durch eine satte Handhabung auszeichnen soll.

Die vorbekannte Anordnung weist noch einen weiteren Nachteil auf, der darin besteht, daß die gabelförmigen Enden am Kopfstück des Stellschafts durch ihren Angriff an der Rippe des Führungsteils sowohl die translatorischen Bewegungen als auch gleichzeitig die rotatorischen Bewegungen auf das Führungsteil und somit auf die Regelscheibe übertragen müssen. Insbesondere hinsichtlich der Einleitung der Drehbewegungen liegen hier sehr ungünstige Hebelarme und nachteilig hohe Flächenpressungen vor.

Das Problem, welches mit der Einleitung von Drehbewegungskräften vom Kopfstück des Stellschaftes auf die Regelscheibe oder das sie überfangende Führungsteil verbunden ist, wurde schon mehrfach in der Patentliteratur angesprochen worden, so z.B. in der DE 27 39 587 C3. Dort wird mit völlig anderen Mitteln das Problem so gelöst, daß die Einleitung der Kräfte, die der Translationsbewegung der Regelscheibe dienen, von der Einleitung der Kräfte, die der Rotationsbewegung dienen, dadurch getrennt werden, daß nur die zur Translationsbewegung erforderlichen Kräfte durch das Kopfstück des Stellschaftes eingeführt werden, wohingegen die gefährlichen, zur Drehbewegung erforderlichen Kräfte über eine Nut-/Federanordnung zwischen einem drehbar geführten Teil und der Regelscheibe eingeleitet werden.

Der vorliegenden Erfindung liegt daher im wesentlichen die Aufgabe zugrunde, ein Einhebelmischventil der eingangs vorausgesetzten Art zu schaffen, bei dem sich die Kräfte, vor allem die der Drehbewegung der Regelscheibe dienenden Kräfte, optimal, d.h. vor allem verschleißarm, einleiten lassen und bei dem Fertigungs- und Montagetoleranzen keinen oder zumindest keinen nennenswerten negativen Einfluß auf den Betätigungskomfort der Armatur ausüben.

Die Erfindung löst diese Aufgabe mit den im Kennzeichenteil des Hauptanspruchs angegebenen Merkmalen.

Demzufolge greift das Kopfstück des Stellschaftes in einer Kreuzfiguration mit einer komplementär gestalteten Kreuznut auf der Rückseite der Regelscheibe (in der Regel also auf dem Rücken des Führungsteils) formschlüssig ineinander. Ein erster, zentraler Kreuzabschnitt dient der Einleitung und Übertragung derjenigen Kräfte, die die Regelscheibe translatorisch bewegen. Dieser erste Kreuzabschnitt ist im wesentlichen zapfenartig gestaltet und kann in dem zugehörigen Nutabschnitt einliegen, ohne daß Fertigungstoleranzen in Richtung zum Schwenklager des Stellschaftes bezüglich der Paßgenauigkeit eine Rolle spielen. Es ergibt sich lediglich, je nach der Richtung, in der sich Toleranzunterschiede auswirken, eine geringfügige Verlängerung oder Verkürzung des translatorischen Verstellwegs der Regelscheibe, aber keine Verminderung des Betätigungskomforts.

Zudem werden vom Kopfstück des Stellschaftes auch diejenigen Kräfte auf die Regelscheibe übertragen, die ihrer Drehbewegung dienen. Hierzu sind vornehmlich die sich senkrecht zu dem erwähnten Kreuzabschnitt erstreckenden Kreuzabschnitte vorgesehen, in denen das Kopfstück mit einem schwenkgleitbaren Schwert eintaucht. Dessen seitliche Flanken können sich im wesentlichen flächig sich an den Nutwänden zur Übertragung der die Drehbewegung einleitenden Kräfte abstützen, sowie mit relativ großem Abstand zum Kreuzzentrum, wodurch größtmögliche Hebelarme wirksam werden. Im Unterschied zum vorbekannten Stand der Technik entsprechend DE 36 00 959 C2 nutzt die Erfindung in geschickter Weise die Flanken der in das Führungsteil bzw. die Regelscheibe eingearbeiteten Nuten bzw. der Nutabschnitte zur Drehkraftübertragung aus.

Besonders vorteilhaft ist es, wenn der Zentralsteg und/oder das Schwert am Kopfstück des Stellschaftes gegenüber den zugeordneten Nutabschnitten geringes Übermaß aufweisen und also mit zumindest leichtem Klemmschluß darin gehalten bzw. geführt sind. Auf diese sehr einfache Weise läßt sich jegliches überflüssiges Spiel ausschalten und damit im übrigen auch der Verschleiß beträchtlich mindern, da die Gesamtanordnung keinen Leergang aufweisen kann.

Die erfindungsgemäße Lösung ist in besonderem Maße dazu geeignet, den Stellschaft einschließlich seines Kopfstücks aus einem einteiligen Kunststoff-Spritzgießkörper fertigen zu können, was aufgrund des bisher hohen Verschleisses solcher Anordnungen nicht oder nur unter erheblichen Umständen möglich war.

Die Kreuznut und der Kreuzabschnitt können einfach-kreuzförmig etwa in Gestalt eines X oder auch doppelt-kreuzförmig, etwa in Gestalt eines H, ausgebildet bzw. angeordnet sein.

Weitere Vorzüge und Vorteile des Einhebelmischventils entsprechend der Erfindung ergeben sich im übrigen auch aus der nachfolgenden Beschreibung der Erfindung anhand von in den Zeichnungen dargestellter Ausführungsbeispiele. In den Zeichnungen zeigen:
- Fig. 1: ein Einhebelmischventil gemäß der Erfindung in einem Längsschnitt, und zwar bei vollständig geschlossenem Ventil,
- Fig. 2: eine der Fig. 1 entsprechende Darstellung, jedoch in der vollständig geöffneten Ventilstellung,
- Fig. 3: einen Längsschnitt in um 90° zu den Darstellungen nach den Fig. 1 und 2 gedrehter Schnittebene,
- Fig. 4: einen Querschnitt entsprechend der Schnittangabe A-B der Fig. 1 durch den Kupplungsbereich zwischen dem Kopfstück des Stellschaftes und dem Führungsteil der Regelscheibe in einer ersten geometrischen, einfachen Kreuzkonfiguration und
- Fig. 5: eine der Fig. 4 entsprechende Darstellung einer alternativen, doppelten Kreuzkonfiguration.

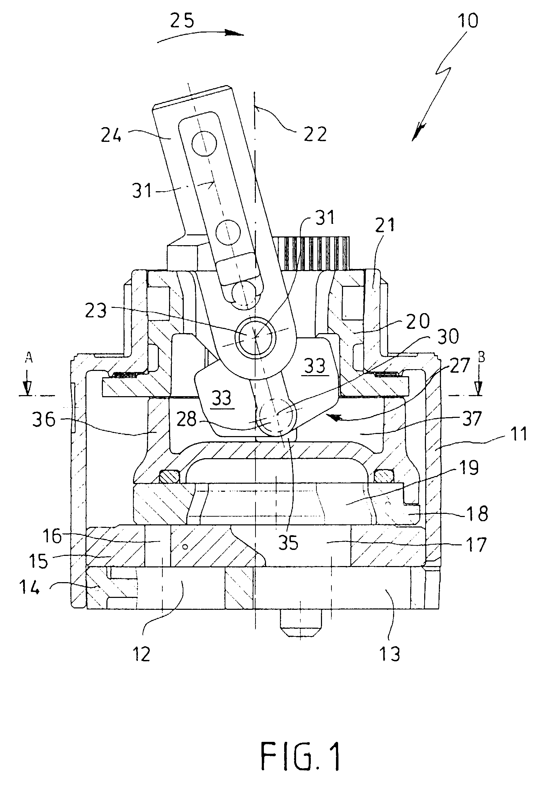

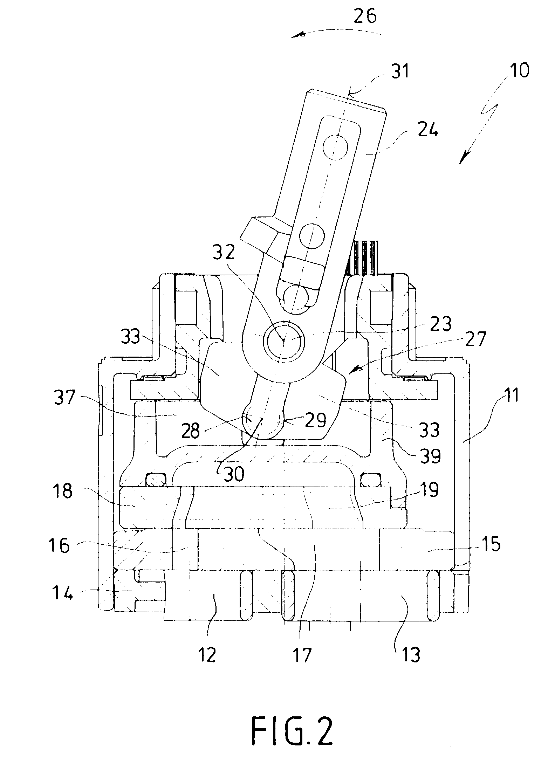

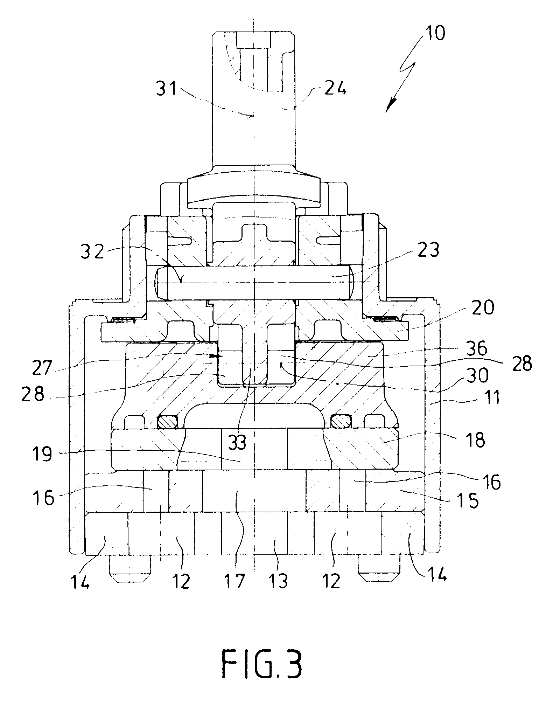

In den Zeichnungen ist ein Einhebelmischventil insgesamt mit 10 bezeichnet. Die in den Fig. 1 bis 3 dargestellte Baugruppe bezeichnet man üblicherweise auch als 'Kartusche'. Das Mischventil umfaßt ein Kartuschengehäuse 11 mit zwei bodenseitig angeordneten Zulauföffnungen für Warm- und Kaltwasser 12 (in Fig. 1 und 2 ist nur eine dargestellt) sowie eine Wasserauslauföffnung 13 auf. Diese Durchtrittsöffnungen 12, 13 sind beim Ausführungsbeispiel in einer in die untere Mündung des Kartuschengehäuses 11 eingesetzten besonderen Bodenplatte 14 eingearbeitet.

Im Innern des Kartuschengehäuses 11 und unmittelbar oberhalb der Bodenplatte 14 ist eine erste Steuerscheibe, die Festscheibe 15, raumfest, d.h. weder verschieblich noch verdrehbar, angebracht. Sie weist ebenfalls zwei Wassereintrittsöffnungen 16 sowie eine Wasserauslauföffnung 17 auf, wobei die Durchtrittsöffnungen 16 mit den Durchtrittsöffnungen 12 der Bodenplatte und die Öffnungen 17 mit den Öffnungen 13 der Bodenplatte 14 kommunizieren.

Eine zweite Steuerscheibe, die Regelscheibe, sitzt unmittelbar auf der Oberfläche der Festscheibe 15 auf und ist mit 18 bezeichnet. Im Unterschied zur Festscheibe 15 ist sie gegenüber der Festscheibe 15 sowohl drehbar als auch translatorisch verschiebbar angeordnet. Sie weist eine Wasserdurchtrittsöffnung 19 auf, die durch Verdrehen und Verschieben ihrer Lage relativ zu den Durchtrittsöffnungen 16, 17 der Festscheibe 15 die Wassermenge und das Mischungsverhältnis Kaltwasser/Warmwasser durch unterschiedliche Überdeckung zu den Durchtrittsöffnungen 16 und 17 in der Festscheibe einstellen kann. Sowohl die Festscheibe 15 als auch die Regelscheibe 18 bestehen üblicherweise aus Keramik.

Die Regelscheibe 18 ist von einem insbesondere aus Kunststoff bestehenden, haubenartigen Führungsteil 36 übergriffen, wobei Regelscheibe 18 und Führungsteil 36 formschlüssig und also bewegungseinheitlich miteinander verbunden sind.

An seiner Oberseite grenzt das Führungsteil 36 an ein Halsteil 20 an, welches innerhalb eines hülsenförmigen Abschnittes 21 des Kartuschengehäuses 11 axial fest, jedoch um die lotrechte Mittelachse 22 drehbeweglich geführt ist. Außerdem lagert das Halsteil 20 auf einer Achse 23 einen mit 24 bezeichneten Stellschaft schwenkbar in Richtung 25 (Fig. 1) bzw. Gegenrichtung 26 (Fig. 2). Die schwenkbare Anordnung des Stellschaftes 24 dient zur Einstellung der Menge des aus der Armatur austretenden Wassers und bedingt die translatorische Verschiebung der Regelscheibe 18 zwischen der durchflußsperrenden einen Extremstellung entsprechend Fig. 1 und der in Fig. 2 dargestellten Extremstellung für maximal geöffnetem Durchlauf. In üblicher Weise erfolgt die Temperatureinstellung durch Verdrehen der Regelscheibe 18 über der Festscheibe 15 mittels Verschwenken des Stellschaftes um die Hochachse 22.

Zur Einleitung der beiden Verstellbewegungen, die unabhängig voneinander oder auch gleichzeitig ausgeführt werden können, weist der Stellschaft 24 an seinem unteren Ende unterhalb seiner Schwenkachse 18 ein besonders gestaltetes Kopfstück 27 auf. Bevorzugt besteht der gesamte Stellschaft 24 einschließlich seines Kopfstück 27 aus einem einstückigen Spritzgießkörper aus Kunststoff, etwa Polyamid oder ABS-Kunststoff.

Das Kopfstück 27 am unteren freien Ende des Stellschaftes 24 weist zur Steuerung der regelscheibe 18 zentral zwei kurze zapfenförmige Achsstummel 28 mit im wesentlichen zylindrischer Oberfläche 29 auf. Die Längsmittelachse 30 der Achszapfen 28 erstreckt sich in derselben Längsmittelebene 31 des Stellschaftes 24 wie die Schwenkachse 23 und parallel zu deren geometrischer Längsachse 32. In wenigstens einer Ebene senkrecht zur Achse 30 erstrecken sich am Kopfstück 27 zu beiden Seiten hin flügelartige, im Querschnitt im wesentlichen rechteckige Schwerter 33.

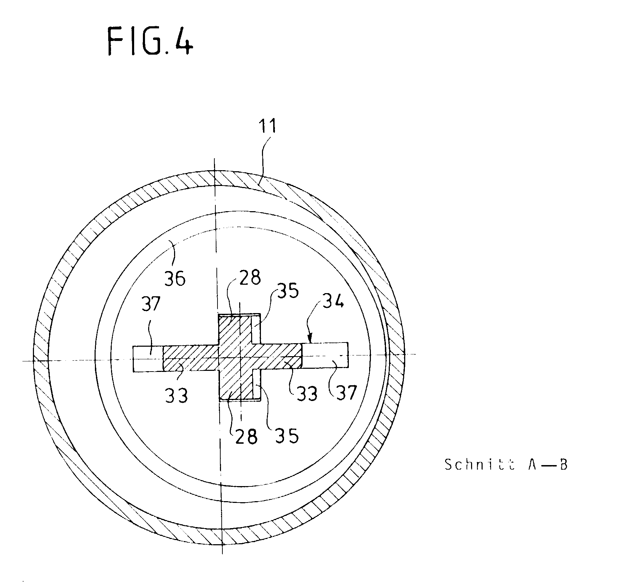

Aus dem Querschnitt der Fig. 4 entsprechend der Schnittlinie A-B aus Fig. 1 ist ersichtlich, daß die beiden zentral gelegenen Achsstummel 28 mit den beiden, ein Schwert 33 darstellenden Flügeln ein Kreuz ausbilden. Jeder der vier Abschnitte oder Aste dieses Kreuzes ist einem Ast einer Kreuznut 34 zugeordnet, die auf der Oberseite des Führungsteils 36 angeordnet ist. In jeweils einem kurzen Nutabschnitt 35 ist ein Achszapfen 28 des Kopfstücks 27 des Stellschaftes 24 schwenkbeweglich gelagert und überträgt auf diese Weise beim Verschwenken des Stellschaftes 24 um die Achse 23 in Richtung 25 bzw. 26 die Kräfte zur translatorischen Verlagerung des Führungsteiles 36 und folglich der mit ihm verbundenen Regelscheibe 18. Die Achsstummel 28 sitzen dabei möglichst spielarm, vorzugsweise sogar unter geringem Klemmschluß spielfrei, in den zugehörigen Nutabschnitten 35 ein. Auch das Schwert 33 kann unter leichtem Klemmschluß in den seiner Aufnahme dienenden Nutabschnitten geführt sein.

Zur Vermeidung von Mißverständnissen sei erwähnt, daß der in Fig. 4 bei 35 erkennbare Freiraum nicht im Eingriffsbereich der Zapfen 28 in die zugehörigen Nutabschnitte vorliegt, sondern ausschließlich aufgrund der Schnittführung durch den hier schmaleren Abschnitt des Kopfstücks 27 zeichnerisch bedingt ist.

Wesentlich ist nämlich, daß möglichst jegliches Spiel zwischen dem Kopfstück 27 und der das Kopfstück 27 aufnehmenden Kreuznut 34 vermieden sein sollte, um die Gesamtanordnung spielfrei zu halten.

Es ist erkennbar, daß die Drehbewegung des Stellschaftes um seine Längsmittelachse 31 von sämtlichen vier Abschnitten der Kreuzkonfiguration entsprechend Fig. 4 in eine Drehbewegung des Führungsteils 36 und der Regelscheibe 18 umgesetzt werden. Hierdurch ist bei geringstmöglicher Flächenpressung ein hervorragendes Krafteinleitungsverhältnis gegeben mit großem auszuübenden Drehmoment.

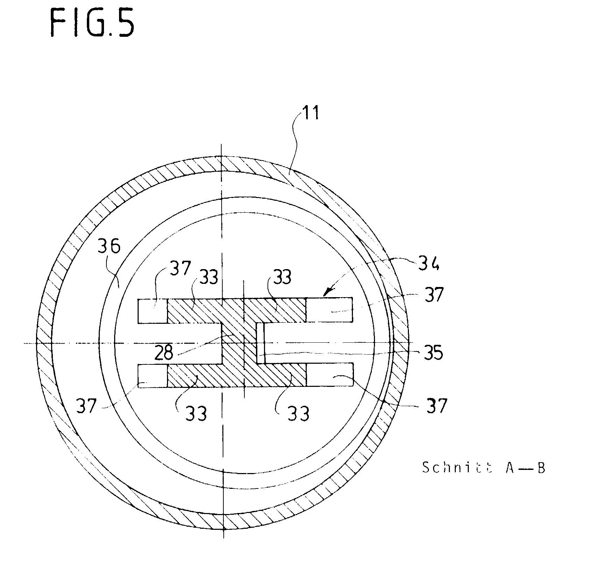

In Fig. 5 ist ebenfalls eine im Sinne der Erfindung kreuzförmige Konfiguration des Eingriffsbereichs zwischen Kopfteil 27 des Stellschaftes 24 und dem Führungsteil 36 dargestellt, jetzt jedoch im wesentlichen in H-Form, die man folglich auch als Doppel-T-Profil bezeichnen könnte. Hier sind nun zwei Schwerter bzw. vier Flügel des Schwertes 33 am Kopfstück 27 ausgebildet, die, wie aus Fig. 5 ersichtlich, außen an einem zentralen Schwenkzapfen angeformt sind. Diese Anordnung gestattet naturgemäß eine noch höhere Drehmomentübertragung bei ansonsten unveränderten Vorteilen gegenüber der Ausführung nach Fig. 4.

Bei beiden Ausführungen ist wesentlich, daß die Flügel bzw. das Schwert 33 mit den Seitenflächen möglichst vollflächig an den Nutseitenwänden angreifen. Schließlich ist wichtig, daß die Schwertflügel 33 ständig in den zu ihrer Aufnahme und Schwenkführung bestimmten Abschnitte 37 der Kreuznut 34 einstecken und also in jeder beliebigen Schwenkstellung des Stellschaftes 24 Drehmoment übertragen können. Die Fig. 1 und 2 zeigen das sehr anschaulich.

Die jeweils einander gegenüberliegenden Wände der Nut 24 sind im wesentlichen planparallel, wodurch die Gesamtanordnung frei ist von Einflüssen, die sich aus Maßtoleranzen bei der Fertigung oder Montage des Stellschaftes 24 ergeben können. Hinsichtlich des spielarmen oder gar spielfreien Eingriffs des Kopfstücks 27 in die Nutanordnung 34 ist es daher unerheblich, wie tief dieser Eingriff erfolgt. Abhängig von den sich ergebenden Toleranzen ist lediglich der transversale Verstellweg für das Führungsteil 36 und die von ihm mitgeführte Regelscheibe 18, was jedoch keinerlei Einfluß auf den Betätigungskomfort der Armatur hat.

## Patentansprüche

1. Einhebelmischventil (10) mit einer feststehenden Steuerscheibe (15) (nachfolgend Festscheibe genannt), die eine Durchtrittsöffnung (16) für Kaltwasser, eine Durchtrittsöffnung (16) für Warmwasser und eine Durchtrittsöffnung (17) für Mischwasser aufweist; mit einer auf der Festscheibe aufliegenden, gegenüber dieser verdreh- und verschiebbaren zweiten Steuerscheibe (18) (nachfolgend Regelscheibe genannt), die aus einer Platte und einem Führungsteil (36) zusammengesetzt sein kann und einen Wasserumlenkkanal (19) enthält, der je nach Relativstellung der beiden Steuerscheiben in unterschiedliche Überdeckung mit den Durchtrittsöffnungen der Festscheibe gebracht werden kann; mit einem Stellschaft (24), der gemeinsam mit einem Halsteil (20) um eine Drehachse (22) verdrehbar und in diesem mittels eines Schwenkzapfens (23) um eine zur Drehachse senkrechte Schwenkachse verschwenkbar ist und an seinem unteren Ende ein Kopfstück (27) aufweist zur translatorischen Verschiebung und zur Verdrehung der Regelscheibe aufweist, deren Rückseite mindestens eine Ausnehmung für den Angriff des Kopfstücks zugeordnet ist, dadurch gekennzeichnet, daß die Ausnehmung auf der Rückseite der Regelscheibe (18) als Kreuznut (34) mit mindestens vier Nutästen (35, 36) ausgebildet ist, daß das Kopfstück (27) des Stellschaftes (24) im Querschnitt im wesentlichen formkomplementär kreuzförmig ausgebildet ist, und daß mindestens ein sich parallel zur Schwenkachse (23) erstreckender Nutast (35) einen im wesentlichen walzenartigen Ansatz (28) des Kopfstücks (27) aufnimmt, während in den wenigstens zwei weiteren, den ersten Nutast (35) kreuzenden Nutästen (37) ein aus Flügeln (33) des Kopfstücks (27) gebildetes Schwert gleitverschwenkbar eintaucht.

2. Einhebelmischventil nach Anspruch 1, dadurch gekennzeichnet, daß das Kopfstück (27) des Stellschaftes (24) mindestens an Teilen seines kreuzförmigen Querschnitts gegenüber der Kreuznut (34) geringes Übermaß aufweist und also sein walzenförmiger Ansatz (28) und/oder das Schwert (33) mit zumindest leichtem Klemm- bzw. Reibschluß darin gehalten bzw. geführt sind.

3. Einhebelmischventil nach Anspruch 1, gekennzeichnet durch eine einfache Kreuzkonfiguration des Kupplungsbereichs zwischen dem Kopfstück (27) des Stellschaftes (24) und der Regelscheibe (18) etwa in Gestalt eines X.

4. Einhebelmischventil nach Anspruch 1 oder 2, gekennzeichnet durch eine mindestens teilweise doppelte Kreuzkonfiguration des Kupplungsbereichs zwischen dem Kopfstück (27) des Stellschaftes (24) und der Regelscheibe (18) etwa in Gestalt eines H.

5. Einhebelmischventil nach Anspruch 1, dadurch gekennzeichnet, daß der Stellschaft (24) einschließlich seines Kopfstücks (27) aus einem einteiligen Kunststoff-Spritzgießkörper besteht.

## Claims

1. Single-lever mixing valve (10) having a stationary control disk (15) (hereinafter referred to as fixed disk), which has a through-opening (16) for cold water, a through-opening (16) for hot water and a through-opening (17) for mixed water; having a second control disk (18) (hereinafter referred to as regulating disk) resting on the fixed disk and twistable and displaceable relative to said fixed disk, which second control disk may comprise a plate and a guide part (36) and contains a water-reversing channel (19) which, depending on the relative position of the two control disks, may be brought to overlap the through-openings of the fixed disk to a differing extent; having an adjusting shaft (24), which is rotatable jointly with a neck part (20) about an axis of rotation (22) and by means of a swivelling journal (23) may swivel in said neck part about a swivelling axis at right angles to the axis of rotation and has at its bottom end a head piece (27) for the translational displacement and twisting of the regulating disk, with the rear side of which at least one recess for the application of the head piece is associated,
characterized in that the recess at the rear side of the regulating disk (18) takes the form of a cross-shaped groove (34) having at least four groove branches (35, 36), that the head piece (27) of the adjusting shaft (24) is designed so as to be of a substantially complementary cross shape in cross section, and that at least one groove branch (35) extending parallel to the swivelling axis (23) receives a substantially cylindrical projection (28) of the head piece (27), while a sword formed by wings (33) of the head piece (27) engages in a sliding/pivotal manner in the at least two further groove branches (37) which cross the first groove branch (35).

2. Single-lever mixing valve according to claim 1,
characterized in that the head piece (27) of the adjusting shaft (24) at least at parts of its cross-shaped cross section has a slight oversize compared to the cross-shaped groove (34) so that its cylindrical projection (28) and/or the sword (33) are held and/or guided therein with an at least slight clamping and/or frictional lock.

3. Single-lever mixing valve according to claim 1,
characterized by a single cross configuration of the coupling region between the head piece (27) of the adjusting shaft (24) and the regulating disk (18), e.g. in the form of an X.

4. Single-lever mixing valve according to claim 1 or 2,
characterized by an at least partially double cross configuration of the coupling region between the head piece (27) of the adjusting shaft (24) and the regulating disk (18), e.g. in the form of an H.

5. Single-lever mixing valve according to claim 1,
characterized in that the adjusting shaft (24) including its head piece (27) comprises an integral plastic injection-moulded body.

## Revendications

1. Mitigeur à manette unique (10) comprenant un disque de commande fixe (15) (appelé disque fixe dans ce qui suit) qui comporte un passage (16) pour l'eau froide, un passage (16) pour l'eau chaude et un passage (17) pour l'eau mélangée ; comprenant un deuxième disque de commande (18) (appelé disque de réglage dans ce qui suit) qui porte sur le disque fixe, qui peut être déplacé en translation et en rotation par rapport à celui-ci, qui peut être composé d'une plaque et d'une partie de guidage (36) et qui comprend un canal de dérivation de l'eau (19), celui-ci pouvant être amené à recouvrir différemment les passages du disque fixe en fonction de la position relative des deux disques de commande ; et comprenant une tige de réglage (24) que l'on peut faire tourner autour d'un axe de rotation (22) solidairement avec un manchon (20), que l'on peut faire pivoter dans celui-ci au moyen d'un tourillon de pivotement (23) autour d'un axe de pivotement perpendiculaire à l'axe de rotation et qui présente à son extrémité inférieure une tête (27), celle-ci étant destinée à déplacer en translation et à faire tourner le disque de réglage au côté arrière duquel est associé au moins un évidement destiné à la venue en prise de la tête, caractérisé par le fait que l'évidement ménagé sur le côté arrière du disque de réglage (18) est réalisé sous la forme d'une rainure en croix (34) présentant au moins quatre branches de rainure (35, 37), par le fait que la tête (27) de la tige de réglage (24) est réalisée en forme de croix en section transversale avec une forme pour l'essentiel complémentaire, et par le fait qu'au moins une branche de rainure (35) qui s'étend parallèlement à l'axe de pivotement (23) reçoit un prolongement (28) de la tête (27) qui est analogue à un rouleau pour l'essentiel, tandis qu'une aile formée par des ailettes (33) de la tête (27) pénètre en pivotant et en glissant dans au moins deux autres branches de rainure (37) qui croisent la première branche de rainure (35).

2. Mitigeur à manette unique selon la revendication 1, caractérisé par le fait que la tête (27) de la tige de réglage (24) présente une dimension légèrement supérieure à celle de la rainure en croix (34), du moins sur des parties de sa section transversale en forme de croix, et que son prolongement en forme de rouleau (28) et/ou l'aile (33) est donc maintenue ou guidée, respectivement, dans cette rainure avec une conjugaison par serrage ou par frottement, respectivement, qui est au moins une conjugaison peu serrée.

3. Mitigeur à manette unique selon la revendication 1, caractérisé par une configuration simple en croix à peu près en forme de X de la zone de l'accouplement entre la tête (27) de la tige de réglage (24) et le disque de réglage (18).

4. Mitigeur à manette unique selon la revendication 1 ou 2, caractérisé par une conformation en croix de la zone de l'accouplement entre la tête (27) de la tige de réglage (24) et le disque de réglage (18) qui est double, du moins partiellement, et qui présente à peu près la forme d'un H.

5. Mitigeur à manette unique selon la revendication 1, caractérisé par le fait que la tige de réglage (24), y compris sa tête (27), est constituée par un corps en matière plastique qui est moulé par injection d'un seul tenant.
